# EUROPÄISCHE PATENTSCHRIFT

(11) **EP 0 563 799 B1**
(45) Veröffentlichungstag und Bekanntmachung des Hinweises auf die Patenterteilung: **20.12.1995**
(21) Anmeldenummer: 93104979.5
(22) Anmeldetag: 25.03.1993
(51) Int. Cl.: A23L 1/16, A21D 13/02, A21D 2/26, A21D 6/00

(54) **Dinkelnudel mit Vollkornmehl**
Spelt noodle with wholemeal
Pâte d'épautre contenant de la farine complète

(30) Priorität: 31.03.1992 DE 9204376 U
(43) Veröffentlichungstag der Anmeldung: 06.10.1993
(73) Patentinhaber: Demmel, Elmar, Dr., D-86672 Thierhaupten (DE)
(72) Erfinder: Demmel, Elmar, Dr., D-86672 Thierhaupten (DE)
(74) Vertreter: von Willich, Werner, Dipl.-Phys.

(56) Entgegenhaltungen:
- DE-A- 3 810 322
- DE-A- 3 814 893
- ALLGEMEINE BÄCKER-ZEITUNG, Band 43, Nr. 34, 19. August 1988, Seiten 16-18; W. SELBEL: "Dinkelweizen-Mahlerzeugnisse in der Bäckerei"
- GETREIDE MEHL UND BROT, TECHNOLOGISCHE ZEITSCHRIFT FÜR GETREIDE, MEHL UND BACKWAREN, Heft 3, 46. Jahrgang, März 1992, Seiten 91-94; N.K. JOTOVA et al.: "Studien über die Anreichung von Teigwaren mit Ballaststoffen"
- REVUE DE L'AGRICULTURE, Heft 5, Jahrgang 25, Mai 1972, Seiten 725-752; R. LEGROS et al.: "Utilisation de l'épeautre en panification"

## Beschreibung

Die Erfindung betrifft eine Dinkelnudel mit Vollkornmehl. Solche Dinkelnudeln sind im Handel erhältlich.

Unter einer "Dinkelnudel" soll eine Nudel verstanden werden, deren Getreideanteil jedenfalls praktisch ausschließlich aus dem Getreide Dinkel stammt. Unter "Vollkornmehl" wird das aus dem vollen Korn, also insbesondere ohne Entfernung der Randschichten, gewonnene Mehl bezeichnet. Mehl bezeichnet hier eine Substanz mit einer Teilchengröße von < = 180 », z. B. bei Dinkelvollkornmehl mit den Bezeichnungen 405, 1050 und 630.

Obwohl die Vorteile des Dinkelgetreides gerade unter ärztlichen Gesichtspunkten bedeutend sind, werden z. B. Nudeln aus Dinkel-Vollkornmehl von einem Teil der Verbraucher abgelehnt, weil sie eine ungewohnt dunkle Farbe und einen für die Verbraucher herkömmlicher Nudeln häufig zu intensiven Geschmack haben. Die Erfindung schafft eine Nudel, die dem weitgehend abhilft, ohne wesentlich auf gesundheitliche Vorteile zu verzichten.

Dies wird erfindungsgemäß dadurch erreicht, daß der Getreideanteil der Nudel zwischen 60 und 75 Gew.-% aus Dinkelgrieß und, zu 100 Gew.-% des Getreideanteils ergänzt, aus Vollkorn-Dinkelmehl besteht.

Bevorzugt liegt der Gewichtsanteil des Dinkelgrießes zwischen 65 und 73 Gew.-%, besonders bevorzugt bei 70 %.

Unter "Getreideanteil" der Nudel wird der Anteil verstanden, der aus dem Ansatz des Getreides (hier Grieß und Vollkornmehl) mit Wasser (Teig) in der fertigen Nudel vorliegt. Üblicherweise werden noch etwa 4 % des Fertiggewichtes der Nudel an Salz hinzugesetzt, was bei den Prozentangaben hier aber nicht berücksichtigt sein soll.

Unter "Grieß" wird hier - in an sich üblicher Weise - ein Getreideprodukt verstanden, dessen Korngröße im wesentlichen über 500 », im allgemeinen aber auch unter 1050 » liegt.

Die erfindungsgemäße Lösung hat insbesondere den Vorteil, daß das fertige Erzeugnis - an sich überraschenderweise - durch den Grieß eine wesentlich hellere Färbung erhält als bei reinem Dinkelvollkornmehl und daß der Dinkelvollkornmehlgeschmack weit weniger hervortritt und sich in einem auch von breitesten Käuferkreisen tolerierten Bereich hält.

Andererseits ist aber die in der fertigen Nudel erhaltene Grießkörnigkeit von großer physiologischer Bedeutung, da sie, wie die Erfahrung gezeigt hat, Darmkrankheiten vorbeugen kann. Dies vor allem deswegen, weil der Stärkegehalt des Grießes erheblich niedriger ist als der des Auszugsmehls, demgegenüber aber einen höheren Proteinanteil aufweist.

Diese günstige Beschaffenheit des Grießes wird durch das Dinkelvollkornmehl physiologisch verstärkt. Somit wird gezielt eine allergene Wirkung auf die Darmschleimhaut vermindert oder sogar vermieden.

Demgegenüber haben Nudeln aus Auszugsmehl, gleich ob Dinkel oder Weizen, infolge des fast ausschließlichen Stärkegehaltes eine hohe allergene Potenz auf die Darmschleimhaut und bergen das Risiko, eine massive Ausbrütung von Hefen und Pilzen im gesamten Intestinum zu begünstigen. Besonders Pilze aber bergen ein erhebliches Risiko für die Darmfunktion, für Entartungsprozesse im Darm und für die Zunahme vieler chronischer Erkrankungen wie z. B. Neurodermitis, Psoriasis, Heuschnupfen und viele andere, darunter auch maligne Prozesse.

Der Grießanteil besteht erfindungsgemäß bevorzugt nicht aus Vollkorngrieß. Da der Grieß aber Auszugsmehl ersetzt, ist der Nährstoffgehalt in Richtung der Proteine, von der Stärke weg, verschoben. Dadurch enthält das Endprodukt auch erheblich weniger Allergene.

Der Dinkelgrieß hat auch deswegen besondere Vorzüge, weil er bevorzugt und erfindungsgemäß aus dem Keimling hergestellt ist, der reich an Proteinen und ungesättigten Fettsäuren wie Vitamin A und E ist.

Die Grießkörnigkeit bewirkt auch einen erwünschten festeren Biß der Nudel.

Insgesamt ist also eine Nudel geschaffen, die geschmackliche und ästhetische Vorzüge mit einem erheblichen Gesundheitswert verbindet.

Die Nudel kann jede beliebige Nudelform aufweisen.

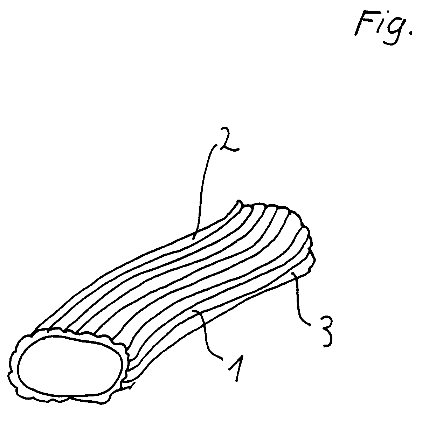

Die einzige Zeichnung zeigt eine übliche Nudelform, in der die Bezugszeichen auf die Bestandteile hinweisen sollen. Diese sind der aus Dinkelgrieß unter Aufnahme von Wasser entstandene Teiganteil 1, der aus Dinkelvollkornmehl unter Aufnahme von Wasser entstandene Teiganteil 2 (die sich in der beanspruchten Weise zu 100 % ergänzen) sowie zusätzlich ein NaCl-Anteil 3 von ca. 4 Gew.-% der Gesamt-Nudelmasse.

## Patentansprüche

1. Dinkelnudel mit Vollkornmehl,
**dadurch gekennzeichnet,**
daß der Getreideanteil der Nudel zwischen 60 und 75 Gew.-% aus Dinkelgrieß und zu 100 Gew.-% ergänzt aus Vollkorn-Dinkelmehl besteht.

2. Dinkelnudel nach Anspruch 1,
dadurch gekennzeichnet.
daß der Dinkelgrießanteil zwischen 65 und 73 Gew.-% liegt.

3. Dinkelnudel nach einem der Ansprüche 1 oder 2,
dadurch gekennzeichnet,
daß der Dinkelgrießanteil 70 Gew.-% beträgt.

## Claims

1. Spelt noodle containing wholemeal flour,
characterized in that
the cereal content of the noodle comprises between 60 and 75 % by weight spelt semolina and spelt wholemeal flour to make up 100 % by weight.

2. Spelt noodle according to Claim 1,
characterized in that
the spelt semolina content is between 65 and 73 % by weight.

3. Spelt noodle according to one of Claims 1 or 2,
characterized in that
the spelt semolina content is 70 % by weight.

## Revendications

1. Pâtes d'epeautre à base de farine complète,
caractérisées en ce
que la teneur en céréale des pâtes est comprise entre 60 et 75 % en poids de semoule d'épeautre, et le complément à 100 % en poids est de la farine complète d'épeautre.

2. Pâtes d'épeautre selon la revendication 1,
caractérisées en ce
que la teneur en semoule d'épeautre est comprise entre 65 et 73 % en poids.

3. Pâtes d'épeautre selon l'une des revendications 1 ou 2,
caractérisées en ce
que la teneur en semoule d'épeautre est égale à 70 % en poids.
